(19) Europäisches Patentamt / European Patent Office / Office européen des brevets

(11) **EP 3 192 693 A1**

(12) **EUROPEAN PATENT APPLICATION**

(43) Date of publication:
**19.07.2017   Bulletin 2017/29**

(51) Int Cl.:
*B60L 11/00* (2006.01)       *H02K 1/27* (2006.01)
*H02K 5/18* (2006.01)        *H02K 9/19* (2006.01)
*H02K 9/22* (2006.01)        *H02K 21/22* (2006.01)
*H02K 21/24* (2006.01)       *H02K 1/20* (2006.01)
*H02K 5/20* (2006.01)        *H02K 7/14* (2006.01)

(21) Application number: **16382616.7**

(22) Date of filing: **16.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority:   **14.01.2016   ES 201630026 P**

(71) Applicant: **Bultaco Motors SL
28023 Madrid (ES)**

(72) Inventor: **KRAMMER, GERT
28023 MADRID (ES)**

(74) Representative: **Durán-Corretjer, S.L.P.
Còrsega, 329
(Paseo de Gracia/Diagonal)
08037 Barcelona (ES)**

(54) **HUB MOTOR AND PERSONAL TRANSPORTATION VEHICLE COMPRISING SAID MOTOR**

(57)      Hub motor comprising a stator (1,2) and a rotor (4) that completely surrounds the stator (1,2), characterised in that the stator (1,2) has a set of stator projections, and the rotor (4) has a set of rotor projections, the rotor projections and stator projections being nested between one another.

Fig.3

**Description**

The present invention relates to hub motors.

Hub motors are used in the field of electric bicycles, among other applications. They are also used in mopeds, light motorcycles and scooters. Like any other electric motor, hub motors in electric bicycles (also known as e-bikes) generate power losses that cause the motor to heat up.

The winding and the ferromagnetic core normally form part of the stator and are responsible for almost all the power losses. These losses are converted to heat, which has to be dissipated.

Hub motors are constructed such that the stator is completely surrounded by the rotor, so the stator cannot be cooled down by means of an induced air flow or by natural convection. The generated heat has to pass through an air chamber between the stator and rotor to reach the outer surface of the motor. Even if there are fins on the outer face of the motor, the air chamber hinders proper dissipation of the generated heat.

The British patent GB2484341 discloses a wheel hub motor in which the stator has windings and the rotor is provided with means for generating a rotor magnetic field that interacts with the windings over an air gap between the rotor and stator, in particular an axial-flux machine referred to as "Y-machine" for a wheel hub. There is a sealed chamber between the rotor and stator. The space between the rotor and stator is filled with a liquid having a boiling point lower than the operating temperature of the static windings but higher than the design temperature of a stator casing. This means that the fluid goes through evaporation/condensation cycles that promote mass and heat transfer from the windings to the outside. The stator further comprises a surface having fins for dissipating heat. In addition, the rotor is connected to a movable device that produces an induced air flow over the surface having the fins.

This device is expensive and complex. Its complexity means that it cannot be used in electric bicycles, for example.

The US patent US-A-6720688 and the British patent GB1429659 disclose a "Y-machine" and a dynamoelectric machine, respectively, in which the rotor has fins for forcing the flow of the fluid separating the windings from the motor casing. Needless to say, the fins that push the fluid incur additional power consumption.

The object of the present invention is to disclose means that improve the transfer of heat in hub motors.

The present invention achieves better heat transfer by means of projections or fins being arranged on both the inner surface of the rotor casing and on the stator in such a way that the projections or fins of the stator and those on the inner surface of the rotor casing are nested between one another.

Nesting said fins between one another is advantageous in that it reduces the air space or gap between the rotor and stator, thus lowering the Reynolds number (Re) of the fluid filling said space. The result is a laminar flow referred to as a Couette flow in the space between projections. In this type of flow, the fluid acts like a plurality of layers that slide on one another without mixing. This produces a number of advantages:

-    the movement resistance limit is minimal;

-    the thermal conductivity across said space is independent of the rotational speed (even at zero speed) and is the same as the specific thermal conductivity of the fluid filling the space;

-    nesting the fins between one another has the advantage of significantly increasing the heat-conducting surface area.

These advantages are greater when the Taylor number is kept below its critical value (approximately 1700, variable depending on geometric parameters) since this prevents the formation of vortices, which, despite increasing heat transfer, also increase the torque required to turn the motor.

With a view to maximising the transfer of heat, it is advantageous for the gap between the nested fins to be as small as possible.

The minimum possible width for the space between fins can be within the range of the space between the stator and the magnets of the rotor, i.e. 0.7 mm or less, depending on the electromagnet design, tolerances and mechanical properties of the components.

Specifically, the present invention discloses a hub motor comprising a stator and a rotor that completely surrounds the stator, characterised in that:

-    the stator has a set of stator projections,

-    the rotor has a set of rotor projections,

the rotor projections and stator projections being nested between one another.

Preferably, the stator projections and the rotor projections are concentric cylindrical fins. The advantage of this fin design is that it is easy to install and assemble. The concentric cylindrical fins can be continuous or discontinuous.

Advantageously, the stator projections and rotor projections leave a space between their surfaces of 1 mm or less; more advantageously, said space is 0.7 mm or less.

The stator projections can be arranged on a wheel connected to the stator.

Advantageously, said wheel and the projections are made of materials having a thermal conductivity of 200 W/mK or more, measured at 300 K. This conductivity promotes heat dissipation through the surface of the projections.

Said wheel and projections can be made of aluminium.

On its outer surface, the rotor preferably further comprises external fins for dissipating heat.

More preferably, the external fins are planar fins arranged radially. Even more preferably, they can have a shape designed to generate a pumping effect in the air surrounding the motor. The external fins can also be needle fins or pin fins, for example. The advantage of these pins is that they have a high heat dissipation coefficient.

In a preferred embodiment, the space between the rotor and stator is filled with a liquid. Said liquid can be selected to improve the thermal conductivity of the air, typically by 10 times or more, and thus the transfer of heat too.

Preferably, said projections have integrated turbine blades for forcing the material in the space between the rotor and stator to be conveyed.

This conveyance produces a circulating flow, preferably between outer and inner diameters, which improve thermal conductivity.

There can also be a fan for forcing the air outside of the rotor to move. This fan can be used, for example, to improve natural convection at low rpm or when in a rest state.

Typically, and preferably, the stator can comprise a ferromagnetic core and a winding.

Preferably, the motor is an axial-flux electric motor. This type of motor is advantageous for this application because it increases the available surface area for the fins and promotes the transfer of heat to the regions of the motor having larger diameters.

To aid understanding, explanatory yet non-limiting drawings are included of an embodiment of a hub motor and a personal transportation vehicle comprising said motor according to the present invention.

Fig. 1 is a section along a diametric plane of a hub motor arranged on a wheel having spokes.

Fig. 2 is a section along a diametric plane of a first embodiment of a hub motor according to the present invention.

Fig. 3 is a section along a diametric plane of a second embodiment of a hub motor according to the present invention.

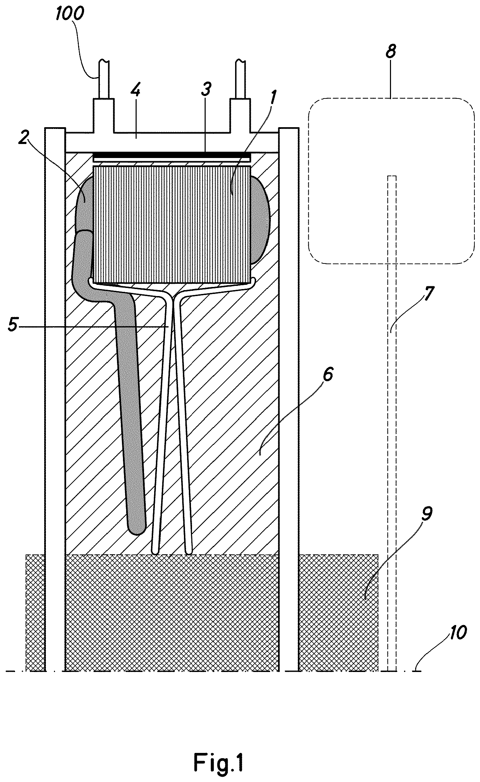

Fig. 1 shows a conventional hub motor arranged in the hub of a wheel comprising spokes -100-. Due to the symmetrical nature of the example, only the part up to the axis of rotation -10- of the wheel has been shown.

The hub motor shown can be used as a driving means in a personal transportation vehicle, e.g. an electric bicycle, positioned on a driving wheel.

Like any electric motor, power losses are produced, which cause the motor to heat up. In the design shown, the stator comprises the ferromagnetic core -1- and the winding -2-, the components mainly responsible for the power losses. The rotor comprises magnets -3- in a casing -4- that covers the stator.

Hub motors are designed such that the casing -4- completely surrounds the rotor. The rotor cannot be cooled down by means of an air flow by natural convection. Due to the position of the motor, which surrounds the shaft -9- of the wheel and is in turn surrounded by the spokes -100- thereof. It is also common for other elements to be arranged near the motor, e.g. a brake disc -7- and its associated shoe -8-. In addition, the stator -1-, -2- has to be connected to the region of the shaft -9- by means of a structure -5- or in another way. Under these conditions, the heat has to pass through a significant layer of air that fills the space -6- and is located between the stator -1-, -2- and the rotor -4-. The thick layer of air hinders effective transfer of heat, which takes place mainly by conduction through the air in the limited region in which the stator and the rotor casing are closest.

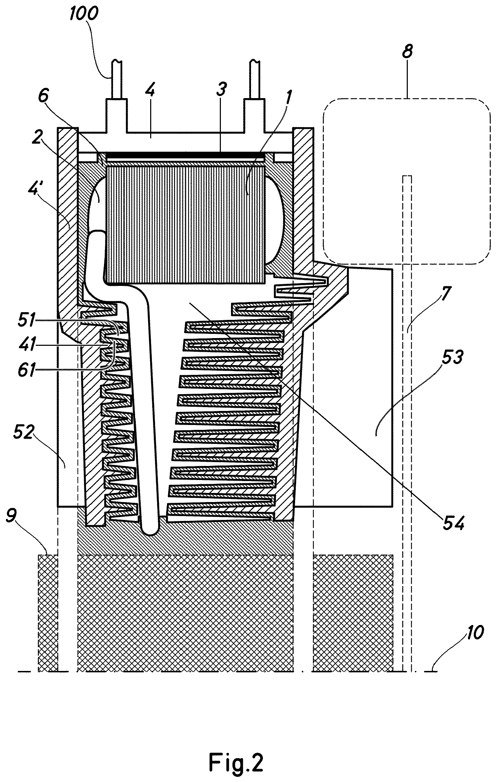

Fig. 2 shows a first embodiment of a motor according to the present invention. Identical or similar elements to those in the embodiment of Fig. 1 have been denoted using the same numerals.

In this embodiment, the stator has a highly conductive aluminium wheel -54- that has concentric cylindrical fins -51-. The side covers -4'- of the rotor -4- have been altered and have concentric cylindrical fins -41- on an inner face. The concentric cylindrical fins -41-, -51- of the stator and rotor are nested between one another such as to leave a narrow space -61- therebetween.

The minimum possible width for the gap -61- is within the range of the minimum space between the stator and the magnets, approximately 0.7 mm or less, depending on the electromagnet design, tolerances and mechanical properties of the components.

As can be seen by comparing Fig. 1 and 2, the heat-conducting surface area has been increased on both the stator and rotor, which are nested between one another. In this case, the projections -41-, -51- are concentric cylindrical fins. They are very simple to assemble.

To improve heat dissipation towards the air flow induced, for example, by the movement of the personal transportation vehicle (e.g. an electric bicycle) on which the hub motor is positioned, or by natural air convection, external fins -53-, -52- have been placed on the outside on the side face -4'- of the stator casing.

The external fins -52-, -53- in the example are oriented radially and the specific shape thereof (not shown in the figures) can be selected to increase the pumping effect if the motor is turning.

The fins can also be pin fins, which have an even greater heat dissipation coefficient than planar fins.

Owing to the small width of the air gap -61-, the Reynolds number (Re) is very low, and so a "laminar Couette flow" is produced between the fins, in which the different layers in the gap -61- do not mix. Under these conditions, the conductivity through the air gap -61- is independent of the angular speed of the motor and is the same as the specific thermal conductivity of the material filling the gap -61-.

For every application and embodiment of the present invention, it may be beneficial in general to keep the fluid flow between projections laminar in order to prevent vortex formation (Taylor-Couette flow). Although the conditions producing this flow depend on the geometry and specifics of each case, it can be assumed that vortices are not produced until the critical Taylor number (Tac). The Taylor number is calculated using the following formula:

$$Ta = \frac{\omega^2\, R_1\, (Dh/2)^3}{y^2}$$

where:

$\Omega$ = rotational speed (rad/s)
R1 = inner diameter
Dh = average hydraulic diameter
Y = kinematic viscosity (m2/s)

Taylor determined that the critical Taylor number (Tac) for a very tight space of infinite length between two cylinders was approximately 1700. The Taylor number of a motor and according to the present invention can be altered by means of the configuration of the angular speed range, the kinematic viscosity of the fluid filling the space between the stator and rotor (air or another fluid), the minimum inner diameter R1 defined by the wheel and the stator projections, and the size of the space between the rotor fins and stator fins (which in turn affect the hydraulic diameter). Of course, for some applications, the motor can be designed to operate with a Ta above the theoretical or actual critical Ta (Tac), with a view to improving the transfer of heat at the expense of electrical losses.

In each case, the Tac can be determined using simple means, merely by determining the angular speed at which either the torque or the resistance to the rotor turning relative to the stator changes.

A discussion on this type of flow can be found, for example, in M. Fénot et al. "A review of heat transfer between concentric rotating cylinders with or without axial flow", International Journal of Thermal Sciences 50(7), 1138-1155.

However, the invention is not limited to laminar systems and is also advantageous in non-laminar systems.

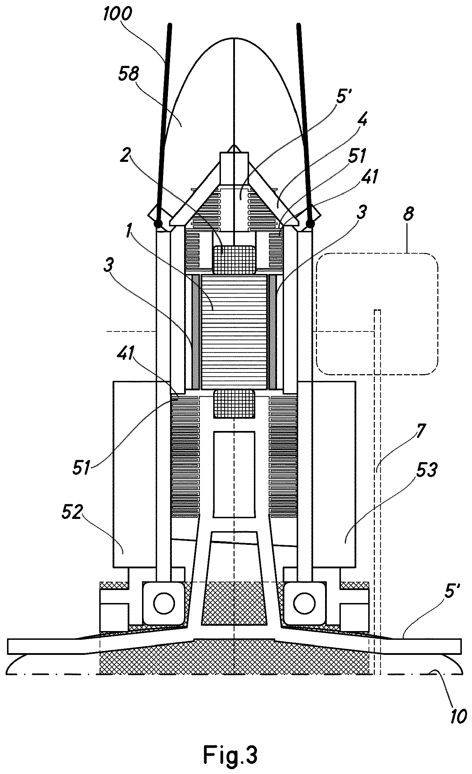

Fig. 3 shows a second embodiment of a motor according to the present invention. Identical or similar elements to those shown in the previous figures have been denoted using the same numerals.

In the example of Fig. 3, the electric motor is an axial-flux motor. As can be seen, this type of motor leaves more surface area free inside for the fins, it being possible for fins -51- to be arranged on the various non-electrical parts -5'- of the stator that are positioned outside and inside the core -1-. In this case, there are also fins -58- on the outer region of the casing, between the spokes -100- of the driving wheel on which the motor is positioned. Of course, fins -58- for dissipating heat can also be arranged in this way in the embodiment of Fig. 2.

In the outermost circumferential region of the motor and between spokes, there are barely any limits on the surface provided with fins, as long as the fins can be fitted. The pumping effect is also much greater than on the side walls of the casing.

To improve the thermal conductivity inside the motor, the air inside can be replaced by another material, for example a liquid.

The idea of projections or fins being nested between one another in the inner part of the motor between the stator and rotor can be improved by not only using concentric closed fins, but also a structure of simple turbine blades that are integrated in the concentric-fin structure in order to gain an advantage from the thermal conductivity by conveying the material that flows through the turbine blades. Owing to the turbine blades and the centrifugal forces resulting from the turning of the motor, the flow circulates towards the outer diameters and returns to the inner region of the stator (not turning), thus further improving conductivity.

To achieve high heat dissipation in the outer region of the rotor towards the flow of ambient air at low driving speeds or in natural convection conditions when stationary, an active electric fan can be used, for example, such as those typically used in water cooling tanks having heat exchangers.

Although the invention has been set out and described with reference to embodiments thereof, it should be understood that these do not limit the invention, and that it is possible to alter many structural or other details that may prove obvious to persons skilled in the art after interpreting the subject matter disclosed in the present description, claims and drawings. Therefore, the scope of the present invention includes any variant or equivalent that could be considered covered by the broadest scope of the following claims.

**Claims**

1. Hub motor comprising a stator and a rotor that completely surrounds the stator, **characterised in that**:

   - the stator has a set of stator projections,
   - the rotor has a set of rotor projections,

   the rotor projections and stator projections being nested between one another.

2. Motor according to claim 1, **characterised in that** the stator projections and rotor projections are concentric cylindrical fins.

3. Motor according to either claim 1 or claim 2, **characterised in that** the stator projections and rotor projections leave a gap between their surfaces of 1 mm or less.

4. Motor according to claim 3, **characterised in that** said gap is 0.7 mm or less.

5. Motor according to any one of claims 1 to 4, **characterised in that** the stator projections are arranged on a wheel connected to the electrical components of the stator.

6. Motor according to claim 5, **characterised in that** said wheel and the projections are made of materials having thermal conductivity of 200 W/mK or more, measured at 300 K.

7. Motor according to claim 6, **characterised in that** said wheel and projections are made of aluminium.

8. Motor according to any one of claims 1 to 7, **characterised in that**, on its outer surface, the rotor further comprises external fins for dissipating heat.

9. Motor according to claim 8, **characterised in that** the external fins are planar fins arranged radially.

10. Motor according to claim 9, **characterised in that** the external fins are needle fins or pin fins.

11. Motor according to any one of claims 1 to 10, **characterised in that** the space between the rotor and the stator is filled with a liquid.

12. Motor according to any one of claims 1 to 11, **characterised in that** said projections have integrated turbine blades for forcing the material filling the space between the rotor and stator to be conveyed.

13. Motor according to any one of claims 1 to 12, **characterised in that** it comprises a fan for forcing the air outside the rotor to move.

14. Motor according to any one of claims 1 to 13, **characterised in that** the stator comprises a ferromagnetic core and a winding.

15. Motor according to any one of claims 1 to 14, **characterised in that** the motor is an axial-flux electric motor.

16. Motor according to any one of claims 1 to 15, **characterised in that** the distance between fins, the kinematic viscosity of the material between the fins and the angular speed range of the motor are such that the average Taylor number in the fin region is less than the critical Taylor number.

17. Personal transportation vehicle comprising a driving wheel, on the shaft of which there is a motor according to any one of claims 1 to 16.

18. Vehicle according to claim 17, **characterised in that** the vehicle is an electric bicycle.

19. Vehicle according to claim 17, **characterised in that** the vehicle is a moped, a light motorcycle or a scooter.

Fig.1

Fig.2

Fig.3

Europäisches
Patentamt

European
Patent Office

Office européen
des brevets

# EUROPEAN SEARCH REPORT

Application Number

EP 16 38 2616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2011/304228 A1 (BRADFIELD MICHAEL D [US]) 15 December 2011 (2011-12-15)<br>* abstract *<br>* paragraph [0021] - paragraph [0022] *<br>* paragraph [0031] - paragraph [0034] *<br>* figures 1-6 *<br>----- | 1-14,<br>16-19<br>15 | INV.<br>B60L11/00<br>H02K1/27<br>H02K5/18<br>H02K9/19<br>H02K9/22<br>H02K21/22 |
| Y<br>A | EP 2 093 098 A1 (YAMAHA MOTOR CO LTD [JP]) 26 August 2009 (2009-08-26)<br>* abstract *<br>* paragraph [0160] - paragraph [0161] *<br>* figures 1-5,22 *<br>----- | 15<br>1,17-19 | H02K21/24<br>H02K1/20<br>H02K5/20<br>H02K7/14 |
| X | DE 10 2013 211361 A1 (GM GLOBAL TECH OPERATIONS INC [US]) 24 December 2013 (2013-12-24)<br>* abstract *<br>* paragraph [0024] - paragraph [0030] *<br>* figures 1-6 *<br>----- | 1-14,<br>16-19 | |
| X | EP 1 137 154 A1 (TECHNICREA RECH [FR]; KAUFFMANN JEAN MARIE [FR]; ESPANET CHRISTOPHE [F) 26 September 2001 (2001-09-26)<br>* abstract *<br>* paragraph [0012] - paragraph [0017] *<br>* paragraph [0024] - paragraph [0027] *<br>* paragraph [0033] - paragraph [0035] *<br>* figures 1,2,4 *<br>----- | 1-10,<br>12-14,<br>16-19 | TECHNICAL FIELDS SEARCHED (IPC)<br><br>B60L<br>H02K |

The present search report has been drawn up for all claims

| Place of search | Date of completion of the search | Examiner |
|---|---|---|
| The Hague | 11 May 2017 | Molnar, Sabinus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 38 2616

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2017

| Patent document cited in search report | | Publication date | Patent family member(s) | | Publication date |
|---|---|---|---|---|---|
| US 2011304228 | A1 | 15-12-2011 | NONE | | |
| EP 2093098 | A1 | 26-08-2009 | AT | 467526 T | 15-05-2010 |
| | | | CN | 101531134 A | 16-09-2009 |
| | | | EP | 2093098 A1 | 26-08-2009 |
| | | | JP | 5497308 B2 | 21-05-2014 |
| | | | JP | 2009225656 A | 01-10-2009 |
| | | | TW | 200950284 A | 01-12-2009 |
| | | | US | 2009212728 A1 | 27-08-2009 |
| DE 102013211361 | A1 | 24-12-2013 | CN | 103516071 A | 15-01-2014 |
| | | | DE | 102013211361 A1 | 24-12-2013 |
| | | | US | 2013342052 A1 | 26-12-2013 |
| EP 1137154 | A1 | 26-09-2001 | EP | 1137154 A1 | 26-09-2001 |
| | | | FR | 2806852 A1 | 28-09-2001 |

EPO FORM P0459

For more details about this annex : see Official Journal of the European Patent Office, No. 12/82

## REFERENCES CITED IN THE DESCRIPTION

**Patent documents cited in the description**

- GB 2484341 A
- US 6720688 A
- GB 1429659 A

**Non-patent literature cited in the description**

- **M. FÉNOT et al.** A review of heat transfer between concentric rotating cylinders with or without axial flow. *International Journal of Thermal Sciences,* vol. 50 (7), 1138-1155